# EUROPÄISCHE PATENTSCHRIFT

(11) **EP 0 738 619 B1**
(45) Veröffentlichungstag und Bekanntmachung des Hinweises auf die Patenterteilung: **02.06.1999**
(21) Anmeldenummer: 96105149.7
(22) Anmeldetag: 30.03.1996
(51) Int. Cl.: B60H 1/00

(54) **Bediengerät für eine mit einer Heizeinrichtung und einer Kälteanlage ausgestattete Klimaanlage eines Kraftfahrzeugs**
Operating apparatus for a vehicle air conditioning having a heating and a cooling device
Appareil de commande pour une installation de climatisation de véhicule avec un dispositif de chauffage et de réfrifération

(30) Priorität: 13.04.1995 DE 19513478
(43) Veröffentlichungstag der Anmeldung: 23.10.1996
(73) Patentinhaber: Behr GmbH & Co., D-70469 Stuttgart (DE); ADAM OPEL AG, 65423 Rüsselsheim (DE)
(72) Erfinder: Kissel, Holger, 63688 Gedern (DE); Köhler, Reinhard, 64560 Riedstadt (DE); Müller, Werner, 64853 Otzberg (DE); Nieling, Andreas, Dipl.-Ing., 71679 Asperg (DE); Frank, Wolfgang, Dipl.-Ing., 71254 Ditzingen (DE)
(74) Vertreter: Riedel, Peter, Dipl.-Ing.

(56) Entgegenhaltungen:
- DE-A- 3 107 722
- DE-A- 3 409 321
- FR-A- 2 373 017
- ATZ AUTOMOBILTECHNISCHE ZEITSCHRIFT, Bd. 90, Nr. 3, 1.März 1988, Seiten 109/110, 112, 114-116, XP000565075 GROHMANN K ET AL: "KLIMAAUTOMATIK DER NEUEN 7ER BAUREIHE VON BMW THE AUTOMATIC HEAT AND AIR CONDITIONER FROM THE NEW 7' SERIES BMW"

## Beschreibung

Die Erfindung betrifft ein Bediengerät für eine mit einer Heizeinrichtung und einer Kälteanlage ausgestattete Klimaanlage eines Kraftfahrzeugs der im Oberbegriff des Anspruchs 1 angegebenen Gattung.

In der DE 31 07 722 A1 ist ein Bediengerät für eine Heiz- und Klimaanlage eines Kraftfahrzeugs beschrieben. Dieses Bediengerät umfaßt mehrere Bedienungselemente und hilfskraftbetriebene Stellorgane sowie zwei unabhängige Schaltkreise, von denen der eine einen Temperaturwähl-Regelkreis und der andere einen Programmwähl-Schaltkreis bildet. Der Temperaturwähl-Regelkreis besteht unter anderem aus einem Temperatur-Wählschalter, einem Innenraum-Temperaturfühler und einem hilfskraftbetätigten Temperaturklappen-Versteller. Der Programmwähl-Schaltkreis besteht aus hilfskraftbetätigten Stellorganen für eine Luftverteilerklappe und eine Umluftklappe sowie einem Programmwählteil, von dem die Stellorgane, das Gebläse und der Kompressor der Kälteanlage geschaltet werden. Das Programmwählteil weist eine Drucktastenanordnung mit mehreren alternativ einrastbaren und mit Symbolen für bestimmte Klimaverhältnisse versehenen Drucktasten auf. Mit jeder der Drucktasten wird ein Programm aktiviert, das nach vorgegebenen Bedingungen auf die verschiedenen Stellorgane für die Luftklappen, das Gebläse und den Kompressor Einfluß nimmt.

Das bekannte Bediengerät ist übersichtlich gestaltet und einfach zu bedienen. Hierfür ist lediglich der Temperaturwählschalter auf die vom Fahrzeuginsassen gewünschte Temperatur einzustellen und eine der im Programmwählteil enthaltenen Tasten zu drücken, die dann zu einer vorbestimmten Einstellung aller Klappen und Aggregate führt. Dies hat jedoch zur Folge, daß keine Möglichkeit besteht, eine individuell vom Fahrer zu bestimmende Heizung oder Belüftung zu erreichen, insbesondere kann eine vom Fahrzeuginsassen gewünschte Gebläsegeschwindigkeit oder Luftverteilung nicht eingestellt werden. Außerdem ist es bei der bekannten Anordnung nicht möglich, die Klimaanlage im sogenannten Reheat-Betrieb zu fahren, da bei geöffneter Temperaturmischklappe die Kälteanlage ausgeschaltet ist. Die festgelegten Programme lassen eine andere Betriebsweise nicht zu. Die einfache Bedienung wird somit durch mangelnden Komfort der Anlage erkauft.

In dem Aufsatz von Grohmann, Kess, Egle "Klimaautomatik der neuen 7er Baureihe von BMW" in ATZ Automobiltechnische Zeitschrift 90 (1988), Heft 3, ist eine Betätigungseinheit der Klimaautomatik beschrieben. Diese Betätigungseinheit umfaßt mehrere Drucktasten, durch die bestimmte Einstellungen der Funktionen der Klimaanlage angewählt werden können. Aufgrund der Signale, die durch die Einstellung der Drucktasten an eine elektronische Steuer- und Regeleinheit gegeben werden, übernimmt diese Steuer- und Regeleinheit vollautomatisch die für Fahrer und Beifahrer getrennte Einstellung der Heiz- und Klimaanlage. Dabei wird die Drehzahl des Gebläsemotors entsprechend der am Wählrad eingestellten Luftmenge geregelt und mehrere Schrittmotoren betätigen Luftklappen und Ventile. Ein wesentlicher Vorzug derartiger elektronischer Steuer- und Regeleinheiten besteht darin, daß logische Verknüpfungen zur Einstellung definierter Betriebszustände wie bspw. die Scheibendefrostung oder dergleichen problemlos zu realisieren sind. Die bekannte Anlage bietet guten Klimakomfort, der Aufwand hierfür ist jedoch nicht zuletzt im Hinblick auf die Vielzahl der Schrittmotoren und der elektronischen Regelung beträchtlich.

Es ist außerdem aus der DE 34 09 321 A1 eine Klimaanlage mit einer Regeleinrichtung zum Regeln des Innenraumklimas bekannt, bei der nach fest vorgegebenen Regelkennlinien in Abhängigkeit von momentan herrschenden Umweltparametern ein möglichst guter Klimakomfort erreicht werden soll. Um den individuellen Behaglichkeitsvorstellungen des Benutzers gerecht zu werden, umfaßt das Bediengerät Eingabetasten, durch die der Benutzer die eingespeicherten Programme innerhalb bestimmter Grenzen variieren kann. Aufgrund der Fülle der Bedienungselemente ist bei dem bekannten Bediengerät die sachgerechte Bedienung schwierig und außerdem ist eine solche Klimaanlage ähnlich aufwendig und kostenintensiv wie bei der Klimaautomatik gemäß dem obengenannten Aufsatz in ATZ.

Der Erfindung liegt die Aufgabe zugrunde, ein Bediengerät der gattungsgemäßen Art zu schaffen, bei dem eine individuelle Einstellung von Behaglichkeitszuständen mit Hilfe mechanischer Stellelemente möglich ist und auf einfache und sichere Weise die Klimaanlage auf maximale Abkühlung der Fahrzeuginnenraumluft eingestellt werden kann.

Diese Aufgabe wird durch ein Bediengerät mit den Merkmalen des Anspruchs 1 gelöst.

Die wesentlichen Vorteile der Erfindung sind darin zu sehen, daß bei einer Klimaanlage für ein Fahrzeug ein Bediengerät mit elektromechanischen Stellelementen vorgesehen werden kann, das individuelle Einstellmöglichkeiten für Behaglichkeitszustände ermöglicht und auch die Einstellung einer maximalen Abkühlung der Fahrzeuginnenraumluft gestattet, ohne daß aufwendige elektronische Regelschaltungen und eine Vielzahl von Schrittmotoren erforderlich sind. Die Bedienung ist äußerst einfach, da lediglich ein einziges Stellelement zur Einstellung der maximalen Kälteleistung betätigt werden muß und Fehlbedienungen völlig ausgeschlossen sind. Die bestimmte Leistungsstufe des Gebläses kann diejenige mit der geringsten Drehzahl >0 sein. Sofern die bestimmte Leistungsstufe bereits eingestellt war, wird diese vorzugsweise beibehalten.

Gemäß einer bevorzugten Weiterbildung des Bediengerätes ist als Mittel zur Kopplung mindestens ein elektrischer Kontakt vorgesehen, der von dem Stellelement betätigbar ist. Auf diese Weise werden bei Einstellen des Stellelementes auf maximale Abkühlung elektrische Signale oder Schaltzustände erzeugt, die den betreffenden Stellgliedern oder Schaltern für die Frischluft/Umluft-Klappe, der Drehzahlsteuerungseinrichtung oder der Kälteanlage zugeführt werden. Sofern durch das Stellelement zum Einstellen der maximalen Abkühlung nicht bereits die Temperaturmischklappe oder ein Heizungsventil eine Stellung einnimmt, die der Funktion "Heizung aus" entspricht, wird auch auf die Temperaturmischklappe bzw. das Ventil entsprechend Einfluß genommen. Da auf diese Weise die Kopplung mittels elektrischer Leitungen erfolgt, ist die räumliche Zuordnung von Bediengerät und Klimaanlage nicht von Bedeutung. Zum Einschalten der Kälteanlage kann der betreffende Kontakt an dem von dem Stellelement betätigbaren Kontakt parallel zu einem im Bediengerät vorgesehenen Schalter für die Kälteanlage angeordnet sein. Ebenso kann mit Hilfe des von dem Stellelement betätigbaren Kontakts in der Stellung für die maximale Abkühlung ein im Bediengerät vorhandener Schalter für die Frischluft/Umluft-Klappe überbrückt werden.

Sofern die räumliche Zuordnung von Bediengerät und Klimaanlage dies gestatten, können die Mittel zur Kopplung mindestens ein mechanisches Übertragungselement umfassen, das mit dem Stellelement einerseits und einem Schalter für die Gebläsedrehzahl und/oder die Frischluft/Umluft-Klappe andererseits verbunden ist. Ferner können mechanische Mittel vorgesehen sein, die zur Betätigung der Temperaturmischklappe in die Funktion "Heizung aus" geeignet sind. Eine solche Lösung bietet sich insbesondere dann an, wenn die Betätigung des Drehzahlschalters für das Gebläse bzw. der Luftverteilerklappen ohnehin über mechanische Übertragungsmittel erfolgt. Als mechanische Übertragungsmittel sind vorzugsweise Gestänge und/oder Seilzüge vorgesehen.

Das Stellelement für maximale Abkühlung kann in Form eines separaten Schalters im Bediengerät ausgeführt sein. Eine weitere Ausgestaltung besteht darin, daß als Schaltelement für die maximale Abkühlung gleichzeitig das Stellelement zum Einstellen der Zuflufttemperatur dient. Auf diese Weise kann ein separates Stellelement eingespart werden, weil die betreffende Funktion von einem ohnehin vorhandenen Stellelement mit übernommen wird. In diesem Fall ist lediglich eine entsprechende Kennzeichnung der betreffenden Schaltstellung erforderlich. Das Stellelement zum Einstellen der Zulufttemperatur ist üblicherweise über einen bestimmten Drehwinkel oder einen Einstellweg bewegbar, der zur Kennzeichnung des jeweiligen Temperaturniveaus eine rote Markierung für den warmen Bereich und eine bspw. blaue Markierung für den Frischluft- bzw. Kaltluftbereich umfaßt. Bedarfsweise können auch andere Farben vorgesehen sein. Es ist daher zweckmäßig, daß die Schaltstellung für maximale Abkühlung im Anschluß an das Ende des Einstellbereichs des Stellelementes vorgesehen ist, und zwar im Anschluß an den Bereich mit blauer Markierung. Außerdem ist es von Vorteil, wenn bei der Betriebsstellung für maximale Abkühlung die Luft aus den Mitteldüsen in den Fahrzeuginnenraum einströmt. Zu diesem Zweck sind vorzugsweise elektrische oder mechanische Mittel zur Kopplung zwischen dem Stellelement für maximale Abkühlung und dem Stellelement für die Luftverteilung vorgesehen.

Ausführungsbeispiele der Erfindung sind nachstehend anhand der Zeichnung näher erläutert. In der Zeichnung zeigt:
- Fig. 1: die Frontansicht eines Bediengerätes mit einem Stellelement für maximale Abkühlung,
- Fig. 2: eine Ausführungsvariante zu Fig. 1,
- Fig. 3a: einen Funktionsablaufplan der Ausführungsvariante nach Fig. 2 bei Einschalten auf maximale Abkühlung,
- Fig. 3b: einen Funktionsablauf der Ausführungsvariante nach Fig. 2 bei Ausschalten des maximalen Abkühlungsbetriebs,
- Fig.4a bis 4c: eine schematisch dargestellte Klimaanlage mit verschiedenen Ausführungen von Antriebs- und Übertragungsmitteln.

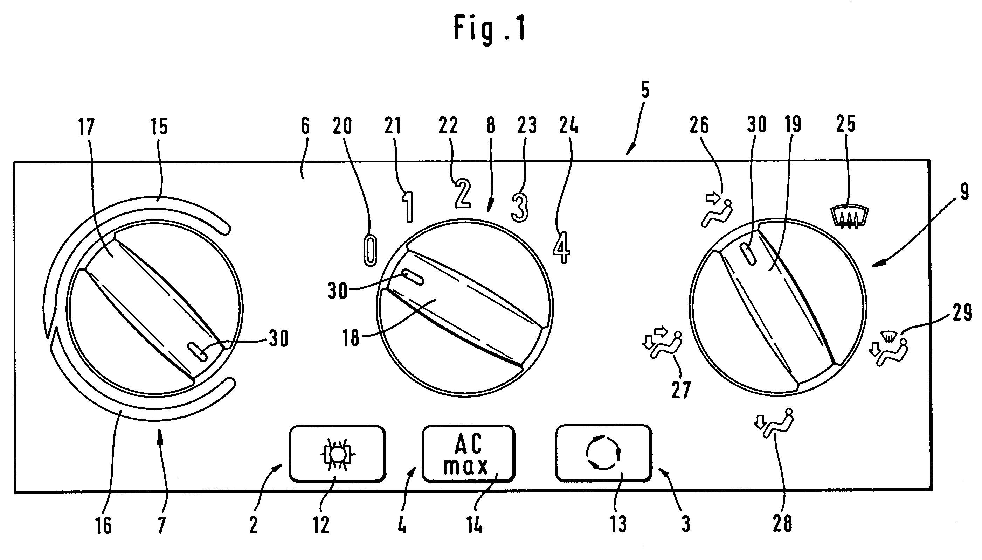

In Fig. 1 ist die Vorderansicht eines Bediengerätes 5 gezeigt, das eine Frontplatte 6 mit drei als Drehknöpfe 17, 18, 19 ausgebildete Steuerelemente 7, 8, 9 sowie drei als Drucktastenschalter 12, 13, 14 ausgebildete Stellelemente 2, 3, 4 umfaßt. Das Stellelement 7 dient zum Einstellen der Zulufttemperatur für den Fahrzeuginnenraum, wobei der Druckknopf 17 von zwei an der Frontplatte 6 vorgesehenen, als Ringsegmente ausgeführten Symbolen 15 und 16 umgeben ist. Das Symbol 15 markiert den Warmluftbereich und das Symbol 16 den Frischluft- bzw. Kaltluftbereich, wobei jeder der Bereiche sich über die Hälfte des Gesamtwinkels beider Ringsegmente von ca. 270° erstreckt. Dieser Winkel entspricht dem maximal möglichen Drehwinkel des Drehknopfes 17. Das Stellelement 7 steht in Wirkverbindung mit einer Temperaturmischklappe oder mit einem Wasserventil des Heizkörpers der Heizeinrichtung.

Das Stellelement 8 dient zum Einstellen der Drehzahl eines Gebläses, wobei der Drehknopf 18 vorzugsweise mit einem Gebläsestufenschalter gekoppelt ist. Gemäß der Darstellung in Fig. 1 sind vier Drehzahlstufen des Gebläses und eine Aus-Stellung vorgesehen, was durch die an der Frontplatte 6 angeordneten Symbole 20, 21, 22, 23, 24 gezeigt ist.

Das Stellelement 9 dient zur Einstellung der Luftverteilung. Hierzu ist der Drehknopf 19 über den gesamten Kreisumfang drehbar und in fünf in gleichmäßigen Winkelabständen befindlichen Hauptstellungen und ggf. in beliebigen Zwischenstellungen einstellbar. Durch entsprechende Symbole 25, 26, 27, 28, 29 sind die Hauptstellungen definiert, wobei die Symbole folgende Bedeutung haben:
- Symbol 25 =: Windschutzscheiben-Defrostung,
- Symbol 26 =: Luftaustritt durch Mitteldüsen,
- Symbol 27 =: Luftaustritt durch Mitteldüsen und Fußraumdüsen,
- Symbol 28 =: Luftaustritt durch Fußraumdüsen und
- Symbol 29 =: Luftaustritt durch Fußraumdüsen und Windschutzscheiben-Defrostung.

Die Drehknöpfe 17, 18, 19 weisen an ihren Knebeln jeweils eine Markierung 30 auf, durch welche die jeweilige Stellung des betreffenden Drehknopfes 17, 18, 19 deutlich erkennbar ist. Die Symbole 15 und 16 sowie 20 bis 29 und die Markierungen 30 bestehen vorzugsweise aus einem lichtdurchlässigen Material, so daß eine Ausleuchtung der Symbole möglich ist.

Im unteren Bereich der Frontplatte 6 befinden sich die Drucktastenschalter 12, 13, 14, wobei der Drucktastenschalter 12 als Stellelement 2 für die Ein- bzw. AusSchaltung der Kälteanlage dient. Durch diesen Drucktastenschalter 12 wird kein Einfluß auf die Stellelemente 7, 8, und 9 genommen, ebensowenig auf die den Stellelementen 7, 8, und 9 zugeordneten Klappen für die Temperatureinstellung und Luftverteilung und den Gebläsestufenschalter.

Mittels des Drucktastenschalters 13 kann ein Stellglied zur Betätigung einer Frischluft/Umluft-Klappe angesteuert werden, so daß vom Fahrzeuginsassen bedarfsweise die Umluftstellung oder die Frischluftstellung gewählt werden kann. Der Drucktastenschalter 14 ist als Stellelement 4 für maximale Abkühlung (AC max) der Fahrzeuginnenraumluft vorgesehen. Sofern von einem Fahrzeuginsassen die maximale Abkühlung der Fahrzeuginnenraumluft gewünscht wird, ist nur dieser eine Drucktastenschalter 14 zu betätigen, wodurch alle erforderlichen Einstellungen der verschiedenen Klappen und Aggregate erfolgen. Damit die entsprechenden Klappen und Aggregatefunktionen eingestellt werden können, sind Mittel zur Kopplung des Drucktastenschalters 14 mit der Frischluft/Umluft-Klappe sowie der Drehzahlsteuereinrichtung des Gebläses und des Schalters 12 für die Kälteanlage vorgesehen. Ebenso wird die Heizeinrichtung ausgeschaltet, indem das Wasserventil geschlossen oder die Temperaturmischklappe in die Kaltluftstellung gebracht wird. Diese Mittel können bspw. durch elektrische Kontakte am Drucktastenschalter und entsprechende Verbindungsleitungen zu Stellgliedern bzw. Schaltern der anzusteuernden Elemente gebildet sein.

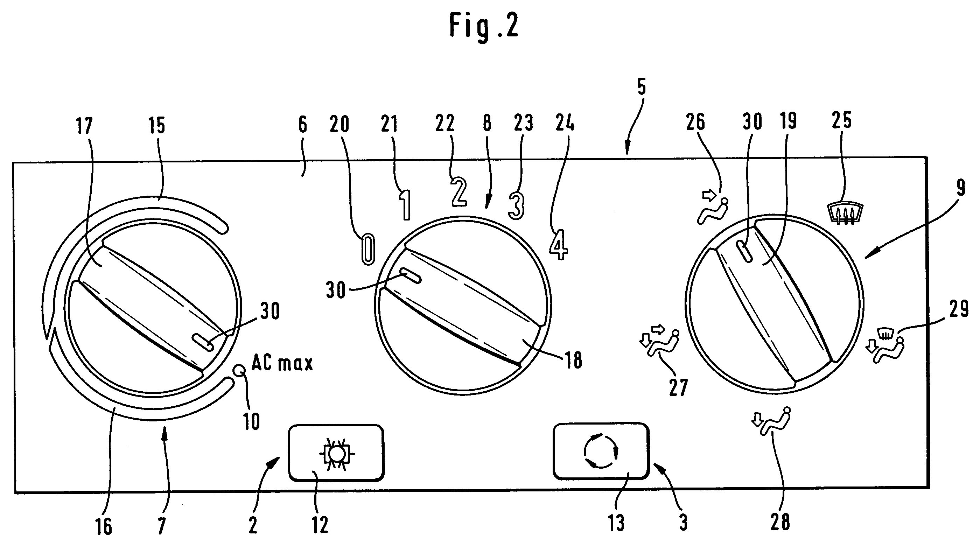

In der Fig. 2 ist die Vorderansicht eines Bediengerätes 5 gezeigt, das im wesentlichen mit demjenigen der Fig. 1 übereinstimmt. Aus diesem Grund stimmen auch die Bezugszeichen für gleiche Teile mit denjenigen der Fig. 1 überein. Anstelle eines separaten Drucktastenschalters ist bei der Ausführung gemäß Fig. 2 das Stellelement 7 derart ausgebildet, daß es gleichzeitig die Funktion zum Einstellen auf maximale Abkühlung (AC max) ermöglicht. Hierzu ist im Anschluß an das Ende des Symbols 16 eine zusätzliche Stellung des Drehknopfes 17 vorgesehen, die durch ein entsprechendes Symbol 10 markiert ist und die Bezeichnung AC max trägt. Bei der in Fig. 2 gezeigten Ausführung kann zur Kopplung des Stellelementes 7 in der durch das Symbol 10 gekennzeichneten Stellung mit der Frischluft/Umluft-Klappe, der Drehzahlsteuereinrichtung und der Kälteanlage ebenfalls ein Schalter mit elektrischen Kontakten und Verbindungsleitungen zu den jeweiligen Stellgliedern bzw. Aggregaten vorgesehen sein. Es ist jedoch je nach Ausführung der Stellelemente auch eine mechanische Kopplung möglich, die durch Gestänge und/oder Seilzüge bzw. pneumatische oder hydraulische Bauelemente gebildet werden kann. Diese Anordnung hat gegenüber der in Fig. 1 gezeigten Ausführung den Vorteil, daß keine Mittel zum Ausschalten der Heizeinrichtung erforderlich sind, da im Endbereich des Symbols 16 die Heizeinrichtung ohnehin unwirksam ist.

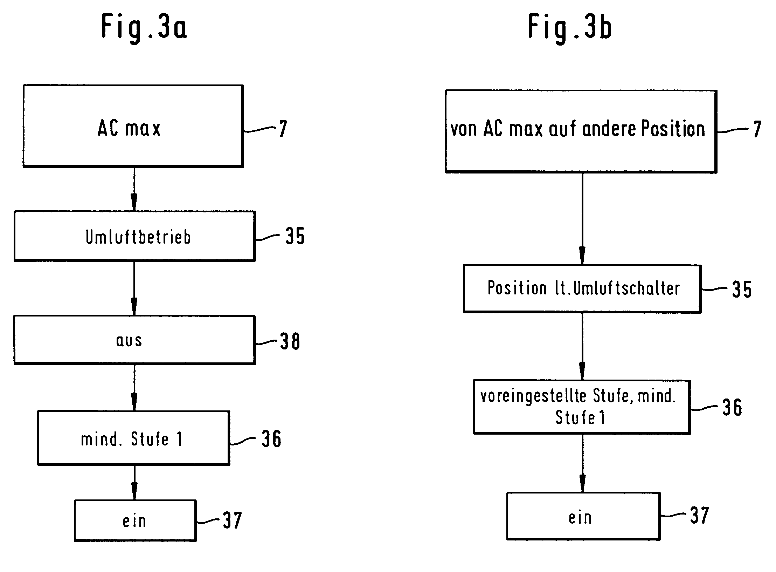

In Fig. 3a ist ein Funktionsdiagramm dargestellt, das dem Einschaltzustand des Stellelementes 7 entspricht. Wird das Stellelement 7 mit Hilfe des Drehknopfes 17 auf maximale Abkühlung der Fahrzeuginnenraumluft (AC max) eingestellt, so wird die Umluftklappe 35 in die Stellung "Umluftbetrieb" gefahren, sofern sie sich nicht durch die vorherige Einstellung bereits in dieser Position befindet. Die Heizung 38 wird auf jeden Fall ausgeschaltet. Sodann wird der Gebläsestufenschalter 36 zunächst in eine Position eingestellt, die mindestens der Gebläsestufe 1 (Symbol 21 des Stellelementes 8) entspricht. Ist das Gebläse bereits eingeschaltet, bleibt der Gebläsestufenschalter 36 unverändert, es sei denn, daß für den Betrieb von "AC max" eine höhere Gebläsestufe als die eingestellte vorgesehen ist. Außerdem wird die Kälteanlage 37 eingeschaltet.

In Fig. 3b ist ein Funktionsdiagramm dargestellt, das in dem Moment wirksam wird wenn das Stellelement für maximale Abkühlung der Fahrzeuginnenraumluft aus der Position "AC max" heraus in eine andere Position eingestellt wird. Wenn somit das Stellelement 7 von der Position "AC max" in eine andere Stellung gebracht wird, erfolgt eine Einstellung der Umluftklappe 35 auf die Position, die der jeweiligen Stellung des Drucktastenschalters 13 entspricht. Die Temperaturmischklappe wird in die Position gebracht, die der durch das Stellelement 7 nun vorgegebenen (aktuellen) Stellung entspricht. Sodann wird der Gebläsestufenschalter 36 auf die Position eingestellt, die der momentanen Stellung des Drehknopfes 18 des Stellelementes 8 entspricht. Die Kälteanlage 37 bleibt solange im eingeschalteten Zustand, bis mit Hilfe des Drucktastenschalters 12 die Kälteanlage abgeschaltet wird.

Es ist vorteilhaft, die Kaltluft im "AC max" Betrieb an bestimmten Düsen in den Fahrzeuginnenraum ausströmen zu lassen. Hierfür werden bevorzugt die Mitteldüsen vorgesehen. Mit Betätigung des Stellelementes 4 oder 7 in die "AC max" Stellung kann auch eine Einflußnahme auf die Luftverteilung erfolgen, wodurch diese in die Position gemäß Symbol 26 gebracht wird.

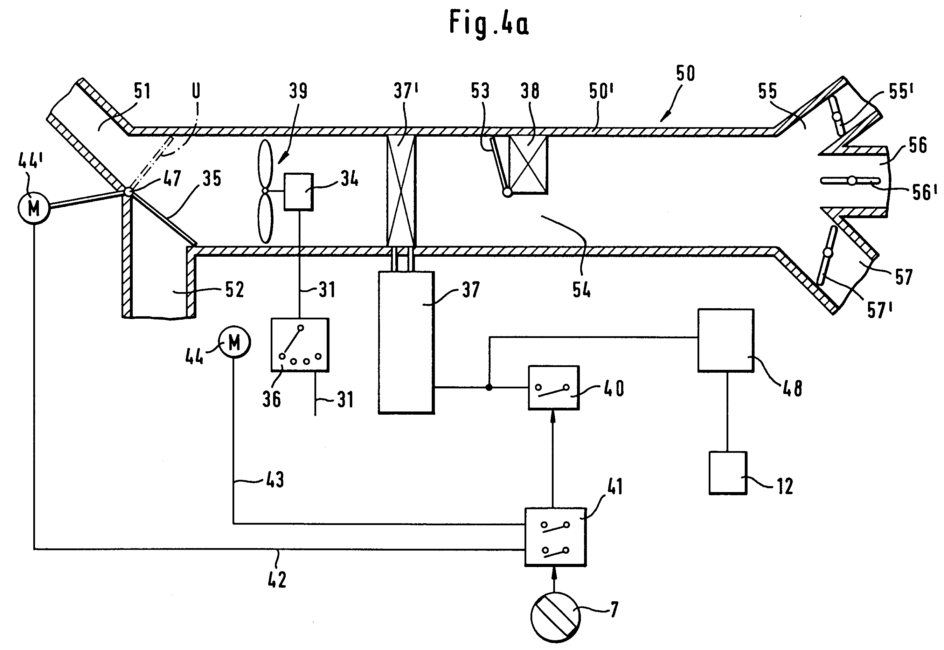

In Fig. 4a ist eine Klimaanlage 50 schematisch dargestellt, deren Gehäuse 50' in der Zeichnung gesehen von links nach rechts von einem Luftstrom durchströmt wird. Eingangsseitig weist das Gehäuse 50' einen Frischluftkanal 51 und einen Umluftkanal 52 auf, in deren Bereich eine Frischluft/Umluft-Klappe 35 um eine Drehachse 47 schwenkbar angeordnet ist. Zum Antrieb der Frischluft/Umluft-Klappe 35 dient ein Schrittmotor 44'. In Luftströmungsrichtung gesehen ist nach der Frischluft/Umluft-Klappe 35 ein Gebläse 39 angeordnet, das von einem Elektromotor 34 angetrieben wird, in dessen elektrischer Zuleitung 31 der Gebläsestufenschalter 36 angeordnet ist. Zur Betätigung des Gebläsestufenschalters 36 dient ein Schrittmotor 44.

In Luftströmungsrichtung ist dem Gebläse 39 ein Verdampfer 37' der Kälteanlage 37 nachgeordnet, der sich über den gesamten Querschnitt des Gehäuses 50' erstreckt, so daß der gesamte Luftstrom den Verdampfer 37' passieren muß. Abströmseitig des Verdampfers 37' befindet sich ein Wärmetauscher, der als Heizung 38 zur bedarfsweisen Erwärmung des Luftstromes dient. Diese Heizung 38 erstreckt sich lediglich über einen Teil des Gesamtquerschnittes im Gehäuse 50', so daß neben der Heizung 38 ein Bypasskanal 54 gebildet ist. Zur Einstellung der jeweiligen Luftströme bzw. Luftstromanteile durch die Heizung 38 und den Bypasskanal 54 dient eine Temperaturmischklappe 53, die vorzugsweise stufenlos zwischen den beiden Endstellungen, nämlich 100% Kaltluft und 100% Warmluft verstellbar ist.

Am rechten Ende des Gehäuses 50' schließen sich ein Defrosterkanal 55, ein Mitteldüsenkanal 56 und Fußraumkanal 57 an. In jedem dieser Kanäle 55, 56, 57 ist eine schwenkbare Klappe 55', 56', 57' angeordnet, wobei diese Klappen von den in Fig. 1 und 2 dargestellten Steuerelementen 9 betätigbar sind. Diese Klappen 55', 56', 57' können - wie bereits zu den Fig. 1 und 2 angegeben - in mehreren Hauptstellungen und ggf. weiteren Zwischenstellungen eingestellt werden.

Der Verdampfer 37' ist Bestandteil der insgesamt mit 37 bezeichneten Kälteanlage, die im normalen Betrieb von einem AC-Steuergerät 48 gesteuert wird. Dieses AC-Steuergerät 48 wird mit Hilfe des in Fig. 1 und 2 dargestellten Drucktastenschalters 12 aktiviert.

Gemäß der Darstellung in Fig. 4a wird mit Hilfe des Stellelementes 7 bei der Einstellung auf das in Fig. 2 gezeigte Symbol 10, das ist die "AC max"-Stellung, ein Schalter 40 in die Schließstellung gebracht, der unabhängig von dem AC-Steuergerät 48 die Kälteanlage 37 zuschaltet, so daß diese mit ihrer maximalen Leistung betrieben wird. Die entsprechende Einstellung des Stellelementes 7 auf das Symbol 10 bewirkt außerdem ein Schließen von elektrischen Kontakten in einem Schalter 41, so daß die mittels Steuerleitung 42 und 43 mit dem Schalter 41 verbundenen Stellmotoren 44 und 44' entsprechend aktiviert werden, um die Umluftklappe 35 in die mit gestrichelten Linien dargestellte Umluftstellung U und den Gebläsestufenschalter 36 in eine bestimmte Leistungsstellung zu bringen.

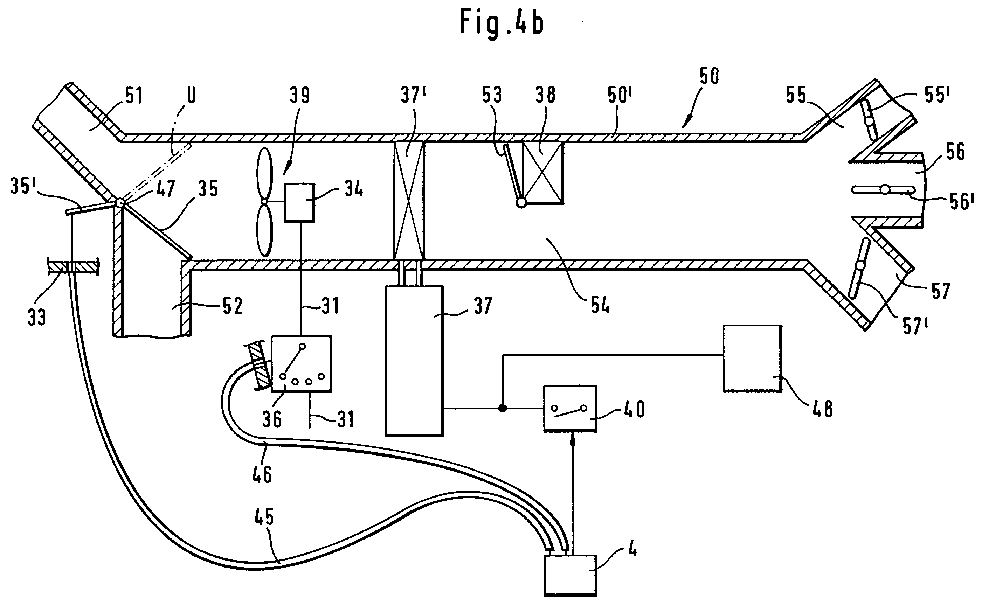

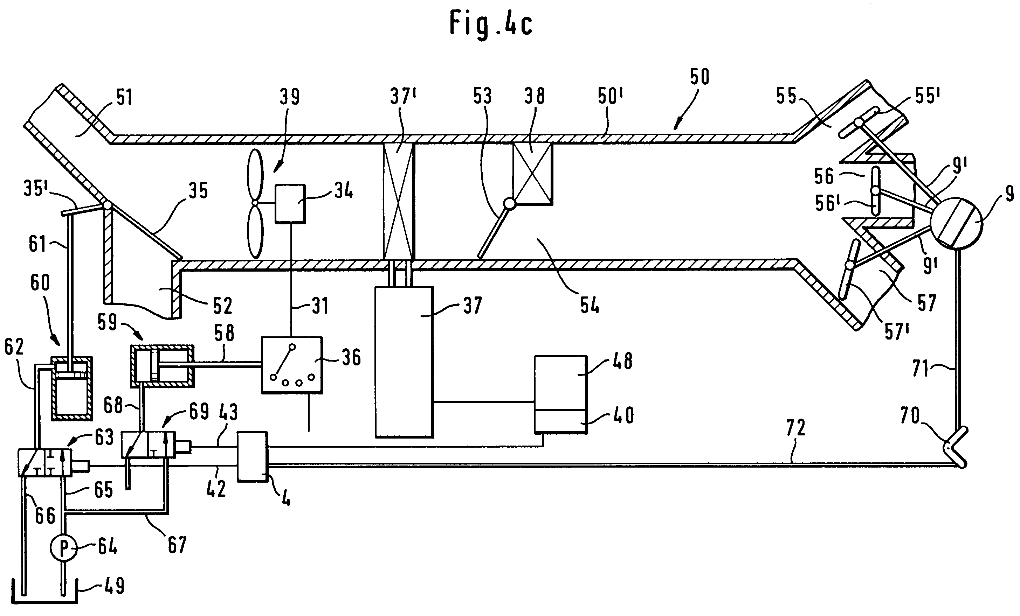

Die Darstellung in Fig. 4b entspricht im wesentlichen der Klimaanlage 50, wie sie in Fig. 4a beschrieben ist, so daß nachfolgend lediglich auf die Unterschiede eingegangen wird. Die Frischluft/Umluft-Klappe 35 ist mit einem Hebel 35' versehen, an den das Ende eines Bowdenzugseils eines Bowdenzugs 45 angelenkt ist. Die Hülle des Bowdenzugs 45 ist an einem gehäusefesten Wandteil 33 des Gehäuses 50' abgestützt. Das andere Ende des Bowdenzugs 45 ist mit dem Stellelement 4 verbunden und wird von diesem betätigt. Ein zweiter Bowdenzug 46 ist zwischen dem Stellelement 4 und dem Gebläsestufenschalter 36 angeordnet, so daß eine mechanische Kopplung des Stellelementes 4 mit dem Gebläsestufenschalter 36 gegeben ist. Bei Betätigung des Stellelementes 4 in die "AC max"-Stellung wird der Kontakt im Schalter 40 geschlossen, so daß die Kälteanlage 37 mit voller Leistung betrieben wird und gleichzeitig erfolgt die Umschaltung der Frischluft/Umluft-Klappe 35 in die Umluftstellung U und die Einstellung des Gebläsestufenschalters 36 auf eine bestimmte Gebläsestufe.

In der Fig. 4c ist wiederum die Klimaanlage 50 mit den wesentlichen Komponenten dargestellt. Im Ausführungsbeispiel der Fig. 4c ist der Schalter 40 in das AC-Steuergerät 48 integriert. Zum Antrieb der Frischluft/Umluft-Klappe 35 sowie des Gebläsestufenschalters 36 dienen Arbeitszylinder 59 und 60, wobei eine Kolbenstange 61 des Arbeitszylinders 60 mit dem Hebel 35' der Frischluft/Umluft-Klappe 35 verbunden ist. Eine Kolbenstange 58 des Arbeitszylinders 59 wirkt auf den Gebläsestufenschalter 36. Die Arbeitszylinder 59 und 60 werden von einem unter Druck stehenden Arbeitsfluid beaufschlagt, wobei es sich bei dem Fluid beispielsweise um eine hydraulische Flüssigkeit oder Luft handeln kann. Der Arbeitszylinder 60 ist mittels einer Fluidleitung 62 mit einem Ventil 63 verbunden, von welchem eine Fluidleitung 66 zu einem Behälter 49 oder Reservoir führt und eine Fluidleitung 65 eine Pumpe 64 mit dem Ventil 63 verbindet.

Der Arbeitszylinder 59 ist mittels einer Fluidleitung 68 mit einem Ventil 69 verbunden und zwischen der Pumpe 64 und dem Ventil 69 ist eine Fluidleitung 67 angeordnet. Die Ansteuerung der Ventile 63 und 69 erfolgt über Steuerleitungen 42 und 43, wobei ein entsprechendes Signal von dem Stellelement 4 erzeugt wird.

Die Klappen 55', 56', 57' in den Kanälen 55, 56, 57 sind über Koppelelemente 9' mit dem Stellelement 9 verbunden, so daß eine Betätigung des Stellelementes 9 unterschiedliche Schwenkbewegungen der Klappen 55', 56' und 57' zur Folge hat. Damit unabhängig von der aktuell eingestellten Position des Stellelementes 9 bei Einschalten des "AC-max"-Zustandes mittels des Stellelementes 4 eine entsprechende Einstellung der Klappen 55', 56' und 57' erfolgt, ist das Stellelement 9 mittels einem Übertragungsgestänge mit dem Stellelement 4 gekoppelt, wobei das Übertragungsgestänge aus einer ersten Stange 71, einem Übertragungshebel 70 und einer zweiten Stange 72 besteht.

## Patentansprüche

1. Bediengerät (5) für eine mit einer Heizeinrichtung und einer Kälteanlage (37) ausgestattete Klimaanlage eines Kraftfahrzeugs, das mindestens ein Stellelement (8) zum Einstellen der Drehzahl eines Gebläses (39), ein Stellelement (7) zum Einstellen der Zulufttemperatur, ein Stellelement (9) zur Einstellung einer Luftverteilung sowie einen Schalter (12) zum Ein- bzw. Ausschalten der Kälteanlage (37) und ein Stellelement (3) zur Betätigung einer Frischluft/Umluft-Klappe (35) umfaßt, dadurch gekennzeichnet,
daß ein Stellelement (4, 7) für maximale Abkühlung der Fahrzeuginnenraumluft vorgesehen ist und Mittel zur Kopplung des Stellelementes (4, 7) mit der Frischluft/Umluft-Klappe (35), einer Drehzahlsteuereinrichtung (36) des Gebläses (39) und eines Schalters (40) für die Kälteanlage (37) vorgesehen sind, durch die bei Einstellung auf maximale Abkühlung die Frischluft/Umluft-Klappe (35) in Umluftstellung, das Gebläse (39) auf eine bestimmte Leistungsstufe und die Kälteanlage (37) auf maximale Leistung schaltbar sind.

2. Bediengerät nach Anspruch 1, dadurch gekennzeichnet,
daß die Mittel zur Kopplung mindestens einen von dem Stellelement (4, 7) betätigbaren elektrischen Schalter (41) und eine elektrische Verbindungsleitung (42, 43) umfassen.

3. Bediengerät nach Anspruch 2, dadurch gekennzeichnet,
daß der Schalter mit einem Kontakt zum Einschalten der Kälteanlage (37) versehen ist.

4. Bediengerät nach einem der Ansprüche 2 oder 3, dadurch gekennzeichnet,
daß der Schalter mit einem Kontakt (41) versehen ist, der mit einem elektromechanischen Stellglied für den Antrieb der Frischluft/Umluft-Klappe (35) verbunden ist.

5. Bediengerät nach einem der Ansprüche 2 bis 4, dadurch gekennzeichnet,
daß der Schalter (41) mit einem Kontakt versehen ist, der mit einer Drehzahlsteuereinrichtung (Gebläsestufenschalter 36) des Gebläses (39) verbunden ist.

6. Bediengerät nach einem der Ansprüche 1 oder 2, dadurch gekennzeichnet,
daß die Mittel zur Kopplung mindestens ein mechanisches Übertragungselement (45, 46) umfassen, das mit dem Stellelement (4, 7) einerseits und einer Drehzahlsteuereinrichtung (36) des Gebläses (39) und/oder der Frischluft/Umluft-Klappe (35) andererseits verbunden ist.

7. Bediengerät nach Anspruch 6, dadurch gekennzeichnet,
daß das mechanische Übertragungsmittel ein Gestänge und/oder einen Seilzug (45, 46) umfaßt.

8. Bediengerät nach einem der Ansprüche 1 oder 2, dadurch gekennzeichnet,
daß die Mittel zur Kopplung pneumatische oder hydraulische Bauelemente (47, 48) umfassen, wobei das Stellelement (4, 7) als Signalgeber und die Aktuatoren für die Drehzahlsteuereinrichtung und/oder die Frischluft/Umluft-Klappe als Arbeitszylinder (59, 60) ausgebildet sind.

9. Bediengerät nach einem der vorhergehenden Ansprüche, dadurch gekennzeichnet,
daß als Stellelement (4) für maximale Abkühlung ein separater Schalter (12) vorgesehen ist.

10. Bediengerät nach einem der Ansprüche 1 bis 9, dadurch gekennzeichnet,
daß als Stellelement für maximale Abkühlung gleichzeitig das Stellelement (7) zum Einstellen der Zulufttemperatur dient.

11. Bediengerät nach Anspruch 10, dadurch gekennzeichnet,
daß im Anschluß an das Ende eines Einstellbereichs (Symbol 16) des Stellelementes (7) eine Schaltstellung (10) für maximale Abkühlung (AC max) vorgesehen ist.

12. Bediengerät nach einem der vorhergehenden Ansprüche, dadurch gekennzeichnet,
daß Mittel (70, 71, 72) zur Kopplung zwischen dem Stellelement (4, 7) für maximale Abkühlung (AC max) und dem Stellelement (9) für die Luftverteilung vorgesehen sind.

## Claims

1. Control unit (5) for an air-conditioning system, of a vehicle, which is fitted with a heating device and a cooling unit (37), which includes at least an adjuster element (8) for adjusting the rev-rate of a fan blower (39), an adjuster element (7) for adjusting the temperature of the supply air, an adjuster (9) for adjusting an air-distribution mechanism, a switch (12) for switching a cooling unit (37) on and off, and an adjuster element (3) for operating a fresh air/recirculated air flap (35), characterized in that
an adjuster element (4, 7) is provided for maximum cooling of the air inside the vehicle, and means for coupling the adjuster element (4, 7) with the fresh-air/recirculated air flap (35) and a rev-rate control device (36), of the fan blower (39), and a switch (40), for the cooling unit (37), are provided, by means of which, with an adjustment to maximum cooling, the fresh/recirculated air flap (35) can be switched into the position of recirculated air, the fan blower (39) can be switched to a particular output rating, and the cooling unit (37) can be set to a maximum output rating.

2. Control unit in accordance with claim 1, characterized in that
the coupling means comprise at least an electrical switch (41), which can be operated by an adjuster element (4, 7), and an electrical connection wire (42, 43).

3. Control unit in accordance with claim 2, characterized in that the switch mechanism is provided with a contact for switching on the cooling unit (37).

4. Control unit in accordance with either claim 2 or claim 3, characterized in that
the switch mechanism is provided with a contact (41) which is connected to an electromagnetic adjustment member for driving the fresh/recirculated air flap (35).

5. Control unit in accordance with one of claims 2 to 4, characterized in that
the switch (41) is provided with a contact which is connected to a rev-rate control device (fan level switch 36) of the fan blower (39).

6. Control unit in accordance with either claim 1 or claim 2, characterized in that
the coupling means comprise at least a mechanical transmission element (45, 46), which is connected, on the one hand, to the adjuster element (4, 7), and also to a rev-rate control device (36) of the fan blower (39) and/or the fresh/recirculated air flap (35).

7. Control unit in accordance with claim 6, characterized in that the mechanical transmission means comprises a linkage member and/or a cable-line (45, 46).

8. Control unit in accordance with either claim 1 or claim 2, characterized in that
the coupling means comprise hydraulic or pneumatic components (47, 48), whereby the adjuster element (4, 7) is developed as a signal provider, and the actuators for the rev-rate control device, and/or the fresh/recirculated air flap, are developed as working cylinders (59, 60).

9. Control unit in accordance with one of the above claims, characterized in that
that a separate switch element (12) is provided as an adjuster element (4) for maximum cooling.

10. Control unit in accordance with one of claims 1 to 9, characterized in that
the adjuster element (7), for adjusting the temperature of the supply air, also, at the same time, serves as an element of adjustment for maximum cooling.

11. Control unit in accordance with claim 10, characterized in that
a switch setting (10), for maximum cooling (AC max), is provided, concerning the end of the range of adjustment (16) of the adjuster element (7).

12. Control unit in accordance with one of the preceding claims, characterized in that
means (70, 71, 72), for coupling between the adjuster element (4, 7), for maximum cooling (AC max), and the adjuster element (9) for air-distribution, are provided.

## Revendications

1. Appareil de réglage (5) destiné à une installation de climatisation d'un véhicule automobile qui est équipée d'un dispositif de chauffage et d'une installation de réfrigération (37), l'appareil comprenant au moins un élément de commande (8) destiné au réglage de la vitesse de rotation d'une soufflante (39), un élément de commande (7) pour le réglage de la température de l'air d'admission, un élément de commande (9) pour l'établissement d'une distribution de l'air, ainsi qu'un interrupteur (12) de branchement et de débranchement de l'installation de climatisation (37) et un élément de commande (3) pour l'actionnement d'un clapet (35) d'air frais/de circulation de l'air, caractérisé
en ce qu'un élément de commande (4, 7) destiné au refroidissement maximal de l'air de l'habitacle du véhicule est prévu et des moyens de couplage de l'élément de commande (4, 7) avec le clapet d'air frais/de circulation d'air (35), un dispositif (36) de commande de la vitesse de rotation de la soufflante (39) et un interrupteur (40) de l'installation de réfrigération (37) sont prévus et permettent, lors d'un réglage au refroidissement maximal, d'assigner le clapet d'air frais/de circulation d'air (35) à la position de circulation de l'air, la soufflante (39), à un étage déterminé de capacité et l'installation de réfrigération (37), à la capacité maximale.

2. Appareil de réglage selon la revendication 1, caractérisé en ce que les moyens de couplage comprennent au moins un interrupteur électrique (41) pouvant être manoeuvré par l'élément de commande (4, 7) et un conducteur électrique de raccordement (42, 43).

3. Appareil de réglage selon la revendication 2, caractérisé en ce que l'interrupteur est muni d'un contact de branchement de l'installation de réfrigération (37).

4. Appareil de réglage selon l'une des revendications 2 ou 3, caractérisé
en ce que l'interrupteur est muni d'un contact (41) qui est raccordé à un organe électromécanique de commande de l'entraînement du clapet d'air frais/de circulation d'air (35).

5. Appareil de réglage selon l'une des revendications 2 à 4, caractérisé
en ce que l'interrupteur (41) est muni d'un contact qui est raccordé à un dispositif de commande de la vitesse de rotation (commutateur à plots 36 de la soufflante) de la soufflante (39).

6. Appareil de réglage selon l'une des revendications 1 ou 2, caractérisé
en ce que les moyens de couplage comprennent au moins un élément mécanique de transmission (45, 46) qui est relié d'une part à l'élément de commande (4, 7) et d'autre part à un dispositif (36) de commande de la vitesse de rotation de la soufflante (39) et/ou du clapet d'air frais/de circulation d'air (35).

7. Appareil de réglage selon la revendications 6, caractérisé en ce que le moyen mécanique de transmission est une tringlerie et/ou un câble Bowden (45, 46).

8. Appareil de réglage selon l'une des revendications 1 ou 2, caractérisé
en ce que les moyens du couplage comprennent des composants pneumatiques ou hydrauliques (47, 48), l'élément de commande (4, 7) étant conformé en générateur de signaux et les organes d'actionnement du dispositif de commande de la vitesse de rotation et/ou du clapet d'air frais/de circulation d'air sont conformés en cylindres de travail (59, 60).

9. Appareil de réglage selon l'une des revendications précédentes, caractérisé
en ce qu'un interrupteur séparé (12) est prévu en élément (4) de commande du refroidissement maximal.

10. Appareil de réglage selon l'une des revendications 1 à 9, caractérisé
en ce que l'élément de commande (7) destiné au réglage de la température de l'air d'admission sert également d'élément de commande du refroidissement maximal.

11. Appareil de réglage selon la revendication 10, caractérisé en ce qu'une position (10) de branchement du refroidissement maximal (AC max) est prévue à la suite de l'extrémité d'une plage de réglage (symbole 16) de l'élément de commande (7).

12. Appareil de réglage selon l'une des revendications précédentes, caractérisé
en ce que des moyens (70, 71, 72) de couplage entre l'élément (4, 7) de commande du refroidissement maximal (AC max) et l'élément (9) de commande de la distribution de l'air sont prévus.
